# EUROPEAN PATENT APPLICATION

(11) **EP 4 258 772 A1**
(43) Date of publication of application: **11.10.2023**
(21) Application number: 20964482.2
(22) Date of filing: 07.12.2020
(51) Int. Cl.: H04W 72/04

(54) **RESOURCE DETERMINATION METHOD, RESOURCE DETERMINATION APPARATUS AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: dompatent von Kreisler Selting Werner - Partnerschaft von Patent- und Rechtsanwälten mbB
(86) International application number: PCT/CN2020/134342
(87) International publication number: WO 2022/120535

(57) **Abstract**

The present disclosure relates to a resource determination method, a resource determination apparatus and a storage medium. The resource determination method comprises: determining a first resource index, wherein the first resource index is a target resource index of a physical uplink control channel corresponding to N physical downlink control channel candidates which are in a connection relationship, the N physical downlink control channel candidates are in one-to-one correspondence with N control resource sets, and N is an integer greater than or equal to 2. By means of the present disclosure, the consistency between a network device and a terminal in terms of determined physical uplink control channel resources is ensured, and the terminal can select the most suitable physical uplink control channel resource, so that the efficiency of the transmission of uplink control signaling is improved.

## Description

### TECHNICAL FIELD

The disclosure relates to a field of wireless communication technologies, particularly to a method for resource determination and an apparatus for resource determination, and a storage medium.

### BACKGROUND

In the new radio (NR) technology, for example, when a communication frequency band is in the frequency range 2, since a high-frequency channel attenuates quickly, it is necessary to use beam-based transmission and reception in order to ensure coverage. When a network device (such as a base station) has multiple transmission reception points (Multi-TRP), the Multi-TRP may be used to provide services for a terminal, including using Multi-TRP to send to the terminal. Similar technologies and defects may exist in any generation of communication technology, so the disclosure only uses the NR as an example for illustration, but does not limit application scenarios of the technology in the embodiments of the disclosure.

In the related art, in the solution of using Multi-TRP to send a physical downlink control channel (PDCCH), the terminal may be configured to receive a transmission configuration indication (TCI) state of the PDCCH, where the TCI state indicates a receiving beam used by the terminal to receive the PDCCH. For example, a control resource set (CORESET) is configured for the terminal, and a TCI state corresponding to the CORESET is also configured, which is a TCI state when the PDCCH is received on the CORESET.

Feedback information of the terminal for the PDCCH needs to be transmitted on a physical uplink control channel (PUCCH). A PUCCH resource index corresponding to the PDCCH may be determined by using an index of a starting control channel element (CCE) of a CORESET corresponding to the PDCCH and a number of CCEs in the CORESET. In the related art, in order to realize that Multi-TRP use multiple PDCCH candidates to transmit the same downlink control information (for example, PDCCHs are repeatedly transmitted), multiple different CORESETs may be configured for the terminal. That is, when the same downlink control information is transmitted using PDCCH candidates of multiple CORESETs, there is a need to solve a problem of how to determine an index of the corresponding PUCCH resource.

### SUMMARY

In order to overcome the problems existing in the related art, the disclosure provides a method for resource determination and an apparatus for resource determination, and a storage medium.

According to a first aspect of the embodiments of the disclosure, there is provided a method for resource determination. The method includes: determining a first resource index, in which the first resource index is a target resource index of a physical uplink control channel (PUCCH) corresponding to N physical downlink control channel (PDCCH) candidates that have a linking relationship, and the N PDCCH candidates have one-to-one correspondence with N control resource sets (CORESETs), where N is an integer greater than or equal to 2.

In an implementation, the linking relationship indicates that the N PDCCH candidates are configured for PDCCH repetition.

In an implementation, the first resource index is determined based on configuration parameters of the N CORESETs.

In an implementation, the first resource index is determined based on a configuration parameter of a first CORESET; and the first CORESET is one or more CORESETs among the N CORESETs.

In an implementation, the configuration parameter of the first CORESET includes at least one of: an index of a starting control channel element (CCE) of the first CORESET; a number of CCEs in the first CORESET; a CORESET index of the first CORESET; or a CORESET pool index of the first CORESET.

In an implementation, the first resource index is determined based on second resource indexes. The second resource indexes are N candidate resource indexes determined based on a configuration parameter of each CORESET in the N CORESETs.

In an implementation, the first resource index is determined based on PUCCH resource parameters corresponding to the second resource indexes.

In an implementation, the PUCCH resource parameter corresponding to the second resource index includes at least one of: a resource index corresponding to a PUCCH resource, a frequency hopping mode corresponding to the PUCCH resource, a second hop physical resource block (PRB) corresponding to the PUCCH resource, a PUCCH format corresponding to the PUCCH resource, a start symbol position corresponding to the PUCCH resource, a number of symbols corresponding to the PUCCH resource, an end symbol position corresponding to the PUCCH resource, a PRB offset corresponding to the PUCCH resource, or an initial cyclic shift corresponding to the PUCCH resource.

In an implementation, the PUCCH resource parameter corresponding to the second resource index includes a resource index corresponding to the PUCCH resource, and the first resource index is a maximum resource index or a minimum resource index among the second resource indexes.

In an implementation, when the PUCCH resource parameter corresponding to the second resource index includes the PUCCH format corresponding to the PUCCH resource, the first resource index is determined by one or a combination of: determining the first resource index based on an amount of feedback data supported by the PUCCH formats for the PUCCH resources corresponding to the second resource indexes; and determining the first resource index based on an aggregation level of downlink control information carried in a PDCCH candidate and a number of symbols occupied by the PUCCH formats for the PUCCH resources corresponding to the second resource indexes and/or an amount of feedback data supported by the PUCCH formats for the PUCCH resources.

In an implementation, when the PUCCH resource parameter corresponding to the second resource index includes the start symbol position corresponding to the PUCCH resource, the first resource index is determined based on based on a duration of receiving and processing downlink data scheduled by downlink control information carried in the N PDCCH candidates and/or downlink control information indicated by the N PDCCH candidates, and the start symbol position corresponding to the PUCCH resource.

In an implementation, when the PUCCH resource parameter corresponding to the second resource index includes the number of symbols corresponding to the PUCCH resource, the first resource index is determined based on a delay requirement of downlink data scheduled by downlink control information carried in the N PDCCH candidates and/or downlink control information indicated by the N PDCCH candidates, as well as the number of symbols and/or the start symbol position corresponding to the PUCCH resource.

In an implementation, when the PUCCH resource parameter corresponding to the second resource index includes the PRB offset corresponding to the PUCCH resource, the first resource index is a resource index with a maximum PRB offset or a minimum PRB offset among the second resource indexes.

In an implementation, when the PUCCH resource parameter corresponding to the second resource index includes the initial cyclic shift corresponding to the PUCCH resource, the first resource index is a resource index with a maximum initial cyclic shift or a minimum initial cyclic shift among the second resource indexes.

In an implementation, the configuration parameter includes at least one of a CORESET index of a CORESET, a CORESET pool index corresponding to the CORESET, an index of a starting CCE of the CORESET, or a number of CCEs in the CORESET.

According to a second aspect of the embodiments of the disclosure, there is provided an apparatus for resource determination. The apparatus includes a processing unit, configured to determine a first resource index. The first resource index is a target resource index of a physical uplink control channel (PUCCH) corresponding to N physical downlink control channel (PDCCH) candidates that have a linking relationship, and the N PDCCH candidates have one-to-one correspondence with N control resource sets (CORESETs), where N is an integer greater than or equal to 2.

In an implementation, the linking relationship indicates that the N PDCCH candidates are configured for PDCCH repetition.

In an implementation, the first resource index is determined based on configuration parameters of the N CORESETs.

In an implementation, the first resource index is determined based on a configuration parameter of a first CORESET; and the first CORESET is one or more CORESETs among the N CORESETs.

In an implementation, the configuration parameter of the first CORESET includes at least one of: an index of a starting control channel element (CCE) of the first CORESET; a number of CCEs in the first CORESET; a CORESET index of the first CORESET; or a CORESET pool index of the first CORESET.

In an implementation, the first resource index is determined based on second resource indexes. The second resource indexes are N candidate resource indexes determined based on a configuration parameter of each CORESET in the N CORESETs.

In an implementation, the first resource index is determined based on PUCCH resource parameters corresponding to the second resource indexes.

In an implementation, the PUCCH resource parameter corresponding to the second resource index includes at least one of: a resource index corresponding to a PUCCH resource, a frequency hopping mode corresponding to the PUCCH resource, a second hop physical resource block (PRB) corresponding to the PUCCH resource, a PUCCH format corresponding to the PUCCH resource, a start symbol position corresponding to the PUCCH resource, a number of symbols corresponding to the PUCCH resource, an end symbol position corresponding to the PUCCH resource, a PRB offset corresponding to the PUCCH resource, or an initial cyclic shift corresponding to the PUCCH resource.

In an implementation, the PUCCH resource parameter corresponding to the second resource index includes the resource index corresponding to the PUCCH resource, and the first resource index is a maximum resource index or a minimum resource index among the second resource indexes.

In an implementation, the PUCCH resource parameter corresponding to the second resource index includes the PUCCH format corresponding to the PUCCH resource, and the first resource index is determined by one or a combination of: determining the first resource index based on an amount of feedback data supported by the PUCCH formats for the PUCCH resources corresponding to the second resource indexes; and determining the first resource index based on an aggregation level of downlink control information carried in a PDCCH candidate and a number of symbols occupied by the PUCCH formats for the PUCCH resources corresponding to the second resource indexes and/or an amount of feedback data supported by the PUCCH formats for the PUCCH resources.

In an implementation, the PUCCH resource parameter corresponding to the second resource index includes the start symbol position corresponding to the PUCCH resource, and the first resource index is determined based on a duration of receiving and processing downlink data scheduled by downlink control information carried in the N PDCCH candidates and/or downlink control information indicated by the N PDCCH candidates, and the start symbol position corresponding to the PUCCH resource.

In an implementation, the PUCCH resource parameter corresponding to the second resource index includes the number of symbols corresponding to the PUCCH resource, and the first resource index is determined based on a delay requirement of downlink data scheduled by downlink control information carried in the N PDCCH candidates and/or downlink control information indicated by the N PDCCH candidates, as well as the number of symbols and/or the start symbol position corresponding to the PUCCH resource.

In an implementation, the PUCCH resource parameter corresponding to the second resource index includes the PRB offset corresponding to the PUCCH resource, and the first resource index is a resource index with a maximum PRB offset or a minimum PRB offset among the second resource indexes.

In an implementation, the PUCCH resource parameter corresponding to the second resource index includes the initial cyclic shift corresponding to the PUCCH resource, and the first resource index is a resource index with a maximum initial cyclic shift or a minimum initial cyclic shift among the second resource indexes.

In an implementation, the configuration parameter includes at least one of a CORESET index of a CORESET, a CORESET pool index corresponding to the CORESET, an index of a starting CCE of the CORESET, or a number of CCEs in the CORESET.

According to a third aspect of the embodiments of the disclosure, there is provided a device for resource determination, including: a processor, and a memory, stored with instructions executable by the processor. The processor is configured to implement the method for resource determination as described in the first aspect or any one implementation in the first aspect.

According to a fourth aspect of the embodiments of the disclosure, there is provided a non-transitory computer-readable storage medium stored with instructions. When the instructions are executed by a processor of a mobile terminal, the mobile terminal is caused to execute the method for resource determination as described in the first aspect or any one implementation in the first aspect.

The technical solutions according to the embodiments of the disclosure may include the following beneficial effects: the target resource index is determined for the PUCCH corresponding to the N PDCCH candidates having a linking relationship, so as to ensure that the network device and the terminal have a consistency to the determined PUCCH resource, and the terminal is enabled to select the most suitable PUCCH resource, which improves the transmission efficiency of uplink control signaling.

It should be understood that both the foregoing general description and the following detailed description are exemplary and explanatory only, which are not intended to limit the embodiments of the disclosure.

### BRIEF DESCRIPTION OF THE DRAWINGS

The accompanying drawings, which are incorporated in and constitute a part of this specification, illustrate embodiments consistent with the disclosure and together with the specification serve to explain principles of the disclosure.
FIG. 1 is a structural diagram of a wireless communication system according to an exemplary embodiment.
FIG. 2 is a flowchart illustrating a method for resource determination according to an exemplary embodiment.
FIG. 3 is a flowchart illustrating a method for resource determination according to an exemplary embodiment.
FIG. 4 is a flowchart illustrating a method for resource determination according to an exemplary embodiment.
FIG. 5 is a flowchart illustrating a method for resource determination according to an exemplary embodiment.
FIG. 6 is a flowchart illustrating a method for resource determination according to an exemplary embodiment.
FIG. 7 is a block diagram of an apparatus for resource determination according to an exemplary embodiment.
FIG. 8 is a block diagram of a device for resource determination according to an exemplary embodiment.

### DETAILED DESCRIPTION

Exemplary embodiments may be described in detail herein, examples of which are illustrated in the accompanying drawings. Where the following description refers to the drawings, the same numerals in different drawings refer to the same or similar elements unless otherwise indicated. The implementations described in the following exemplary embodiments do not represent all implementations consistent with the disclosure. Rather, they are merely examples of apparatuses and methods consistent with some aspects of the disclosure, as recited in the appended claims.

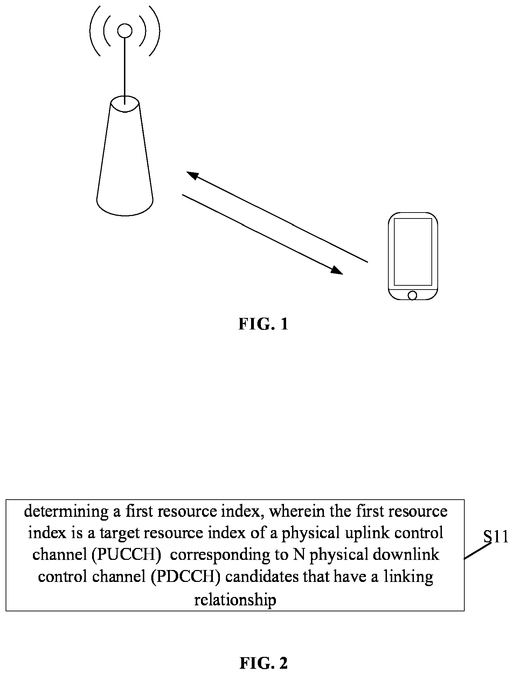

The method for data transmission according to the embodiments of the disclosure may be applied to the wireless communication system shown in FIG. 1. Referring to FIG. 1, the wireless communication system includes a terminal and a network device. The terminal is connected to the network device through wireless resources, sends and receives data.

It may be understood that the wireless communication system shown in FIG. 1 is only for schematic illustration, and the wireless communication system may also include other network devices, such as core network devices, wireless relay devices, and wireless backhaul devices, etc. which are not shown in FIG. 1. A number of network devices and a number of terminals included in the wireless communication system are not limited in the embodiment of the disclosure.

It may be further understood that the wireless communication system in the embodiment of the disclosure is a network that provides a wireless communication function. The wireless communication system may use different communication technologies, such as code division multiple access (CDMA), wideband code division multiple access (WCDMA), time division multiple access (TDMA) , frequency division multiple access (FDMA), orthogonal frequency-division multiple access (OFDMA), single carrier FDMA (SC-FDMA), Carrier Sense Multiple Access with Collision Avoidance. According to the capacity, speed, delay and other factors of different networks, the network may be divided into a 2nd generation (2G) network, a 3G network, a 4G network or a future evolution network, such as a 5G network. The 5G network may also be called a new radio (NR) network. For convenience of description, a wireless communication network may be simply referred to a as a network in the disclosure sometimes.

Further, the network device involved in this disclosure may also be referred to as a radio access network device. The wireless access network device may be a base station, an evolved base station (evolved node B, eNB), a home base station, an access point (AP) in a wireless fidelity (WIFI) system, a wireless relay node, a wireless backhaul node, a transmission point (TP) or a transmission and reception point (TRP), etc. The wireless access network device may also be a gNB in an NR system, or may also be a component or a part of device that constitutes a base station. When it is a vehicle-to-everything (V2X) communication system, the network device may also be a vehicle-mounted device. It should be understood that, the specific technology and specific device form adopted by the network device may be not limited in the embodiments of the disclosure.

Further, the terminal involved in this disclosure may also be referred to as a user equipment (UE), a terminal, a mobile station (MS), a mobile terminal (MT), etc., which is a device that provides users with voice and/or data connectivity. For example, a terminal may be a handheld device or a vehicle-mounted device with a wireless connection function. At present, examples of some terminals are: smart phones, pocket personal computers (PPCs), palmtop computers, personal digital assistants (PDAs), notebook computers, tablet computers, wearable devices, or vehicle-mounted devices, etc. In addition, when it is a vehicle-to-everything (V2X) communication system, the terminal device may also be a vehicle-mounted device. It should be understood that, the specific technology and specific device form adopted by the terminal may be not limited in the embodiment of the disclosure.

In the disclosure, data transmission is performed based on a beam between a network device and a terminal. During the beam-based data transmission, the network device (such as a base station) may use multiple transmission reception points (which are also referred to as Multi-TRP) to send a physical downlink control channel (PDCCH) to the terminal. In the related art, when the network device (such as a base station) uses one TRP to send a PDCCH to a terminal, a transmission configuration indication (TCI) state for receiving the PDCCH is configured for the terminal. For example, the configuration method is: configuring a CORESET such as CORESET#1 for the terminal, configuring a TCI state used by the terminal to be TCI#1 when receiving the PDCCH in the resource CORESET#1, and configuring a search space set (SS set) for the terminal to associate with CORESET#1. When the PDCCH is received on the resource in the SS set, the terminal uses a beam corresponding to TCI#1 for reception. Currently, each SS set can only be associated with one CORESET, and each CORESET can only be configured with one TCI state.

In the disclosure, data transmission is performed based on a beam between a network device and a terminal. During the beam-based data transmission, when the network device (such as a base station) uses Multi-TRP to transmit the PDCCH to the terminal, different TRPs use different beams for transmission.

Further, in order to realize that Multi-TRP send the same PDCCH to improve the reliability of PDCCH, there are currently several methods.

Method 1: two TCI states are configured for one CORESET. An SS set is configured to associate with this CORESET, and this SS set may correspond to two TCI states. Alternatively, two SS sets are configured to associate with this CORESET, and each SS set corresponds to one of the TCI states.

Method 2: an SS set is configured to associate with two CORESETs, each CORESET corresponds to a TCI state, and the SS set may correspond to two TCI states.

Method 3: two CORESETs are configured, each CORESET corresponds to a TCI state, and SS sets are configured to associate with the two CORESETs, respectively. That is, two SS sets are configured to associate with different CORESETs and correspond to different TCI states.

The above methods may implement PDCCH transmission by Multi-TRP, and different TCI states correspond to different TRPs. In the related art, a PUCCH resource index of a PUCCH resource that needs to be used for feedback information of the PDCCH may be determined by using an index of a starting CCE of a CORESET corresponding to the PDCCH and a number of CCEs in the CORESET. However, when multiple PDCCH candidates having a linking relationship correspond to different CORESETs, there is a problem that needs to be solved on how to determine an index of a PUCCH resource corresponding to the same downlink control information (DCI) transmitted by the multiple PDCCH candidates. For example, the linking relationship indicates that multiple PDCCH candidates are used for PDCCH repetition. When the PDCCH is repeatedly transmitted, multiple different CORESETs may be configured for the terminal. For example, the above method 2-3 use two CORESETs. When PDCCH candidates corresponding to multiple CORESETs are used to transmit the same DCI, there is a problem that needs to be solved on how to determine the index of the PUCCH resource to be used for the corresponding feedback information.

It should be understood that multiple PDCCH candidates use different beams, but time domain resources or frequency domain resources corresponding to the multiple PDCCH candidates may be the same or different.

The disclosure provides a method for resource determination, which is mainly directed to a method for determining a target resource index of a corresponding PUCCH resource when multiple PDCCH candidates having a linking relationship transmit the same DCI. Each PDCCH candidate among the plurality of PDCCH candidates having a linking relationship is associated with a different CORESET and corresponds to a different TCI state. For example, for two CORESETs used for PDCCH repetition, a resource for a PUCCH resource index corresponding to one of the CORESETs is used. In an implementation, the PUCCH resource index may be determined based on parameters of the CORESET, and/or, candidate PUCCH resources may be determined according to the CORESET and the PUCCH resource index may be determined based on parameters of the candidate PUCCH resources.

FIG. 2 is a flowchart illustrating a method for resource determination according to an exemplary embodiment. As shown in FIG. 2, the method for resource determination is applied to a terminal and includes the following step.

At S11, a first resource index is determined. The first resource index is a target resource index of a PUCCH corresponding to N PDCCH candidates having a linking relationship.

N PDCCH candidates correspond to N CORESETs one by one.

In the method for resource determination according to the embodiments of the disclosure, the linking relationship existed between N PDCCH candidates may be understood as that, the N PDCCH candidates are used for PDCCH repetition. That is, the N PDCCH candidates transmit the same DCI or schedule the same physical downlink shared channel (PDSCH) or physical uplink shared channel (PUSCH).

N is an integer greater than or equal to 2. In an implementation, N has a typical value being 2.

In an implementation, in the method for resource determination according to the embodiments of the disclosure, the terminal determines a target PUCCH resource index, and a PDCCH candidate corresponding to the target PUCCH resource index occupies resources of at least two CORESETs.

In an implementation, the first resource index is determined based on configuration parameters of N CORESETs.

In the embodiment of the disclosure, the configuration parameter used to determine the first resource index includes at least one of: a CORESET index of a CORESET, a CORESET pool index corresponding to the CORESET, an index of a starting CCE of the CORESET, and a number of CCEs in the CORESET.

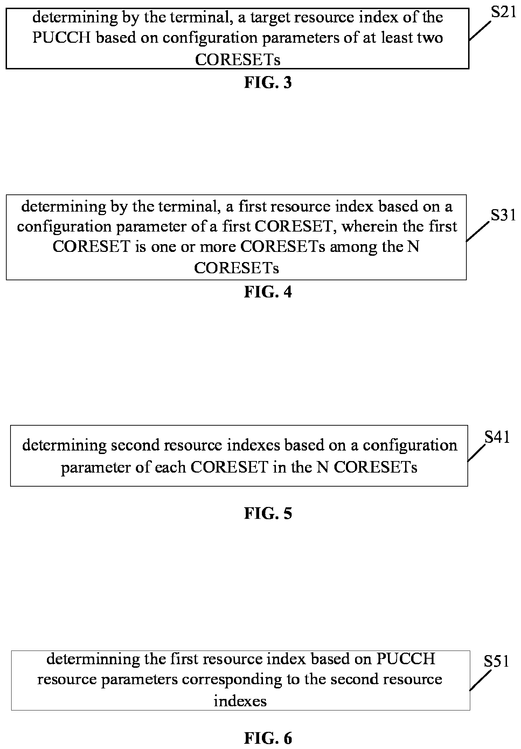

FIG. 3 is a flowchart illustrating a method for resource determination according to an exemplary embodiment. Referring to FIG. 3, the method for resource determination is applied to a terminal, and includes the following step.

At S21, the terminal determines a target resource index of the PUCCH based on configuration parameters of at least two CORESETs.

The terminal may determine the target PUCCH resource index based on at least one of: CORESET indexes of at least two CORESETs, a CORESET pool index corresponding to a CORESET, an index of a starting CCE of a CORESET, and a number of CCEs in a CORESET.

In another implementation of the embodiment of the disclosure, the first resource index is determined based on configuration parameters of one or more CORESETs among the N CORESETs.

In an implementation, when the typical value of N is 2, the first resource index is determined based on a configuration parameter of one CORESET of the two CORESETs. For example, the terminal determines the target PUCCH resource index according to a configuration parameter of one CORESET in at least two CORESETs.

In the embodiments of the disclosure, the CORESET used to determine the first resource index is referred to as a first CORESET. The first CORESET is one or more CORESETs among the N CORESETs.

FIG. 4 is a flowchart illustrating a method for resource determination according to an exemplary embodiment. Referring to FIG. 4, the method for resource determination is applied to a terminal, and includes the following step.

At S31, the terminal determines a first resource index according to a configuration parameter of a first CORESET. The first CORESET is one or more CORESETs among the N CORESETs.

In the embodiment of the disclosure, the configuration parameter of the first CORESET includes at least one of: a CORESET index of the CORESET, a CORESET pool index corresponding to the CORESET, an index of a starting CCE of the CORESET, and the number of CCEs in the CORESET.

For example, the configuration parameter of the first CORESET includes at least one of: an index of a starting CCE of the first CORESET, a number of CCEs in the first CORESET, a CORESET index of the first CORESET, and a CORESET pool index corresponding to the first CORESET.

In an example, in the method for resource determination according to the embodiments of the disclosure, the first CORESET is a CORESET with the minimum starting CCE index among the at least two CORESETs.

In an example, in the method for resource determination according to the embodiments of the disclosure, the first CORESET is a CORESET with the maximum starting CCE index among the at least two CORESETs.

In an example, in the method for resource determination according to the embodiments of the disclosure, the first CORESET is a CORESET with the smallest number of CCEs among the at least two CORESETs.

In an example, in the method for resource determination according to the embodiments of the disclosure, the first CORESET is a CORESET with the largest number of CCEs among the at least two CORESETs.

In an example, in the method for resource determination according to the embodiments of the disclosure, the first CORESET is a CORESET with the minimum CORESET index among the at least two CORESETs.

In an example, in the method for resource determination according to the embodiments of the disclosure, the first CORESET is a CORESET with the maximum CORESET index among the at least two CORESETs.

In an example, in the method for resource determination according to the embodiments of the disclosure, the first CORESET is a CORESET with the minimum CORESET pool index corresponding to the CORESET among the at least two CORESETs.

In an example, in the method for resource determination according to the embodiments of the disclosure, the first CORESET is a CORESET with the maximum CORESET pool index corresponding to the CORESET among the at least two CORESETs.

In another implementation of the embodiments of the disclosure, candidate PUCCH resource indexes are determined according to the N CORESETs, and the PUCCH resource indexes are determined based on the candidate PUCCH resource indexes.

In an implementation, candidate PUCCH resource indexes may be determined based on a configuration parameter of each CORESET in the N CORESETs.

In the method for resource determination according to the embodiments of the disclosure, for convenience of description, the candidate PUCCH resource indexes determined based on the N CORESETs are referred to as second resource indexes. In the embodiment of the disclosure, the first resource index is determined based on the second resource index. The second resource indexes are N candidate resource indexes determined based on a configuration parameter of each CORESET in the N CORESETs.

FIG. 5 is a flowchart illustrating a method for resource determination according to an exemplary embodiment. Referring to FIG. 5, the method for resource determination is applied to a terminal, and includes the following steps.

At S41, second resource indexes are determined based on a configuration parameter of each CORESET in the N CORESETs.

The second resource indexes are N candidate resource indexes determined based on a configuration parameter of each CORESET in the N CORESETs.

In an example, the terminal determines each candidate PUCCH resource index corresponding to each CORESET according to a configuration parameter of each CORESET in at least two CORESETs.

The configuration parameter of each CORESET may include at least one of: a CORESET index of the CORESET, a CORESET pool index corresponding to the CORESET, an index of a starting CCE of the CORESET, and a number of CCEs in the CORESET.

Further, in the embodiment of the disclosure, the first resource index may be determined based on the second resource indexes.

FIG. 6 is a flowchart illustrating a method for resource determination according to an exemplary embodiment. Referring to FIG. 6, the method for resource determination is applied to a terminal, and includes the following steps.

At S51, the first resource index is determined based on PUCCH resource parameters corresponding to the second resource indexes.

In the embodiment of the disclosure, the PUCCH resource parameter corresponding to the second resource index includes at least one of: a resource index corresponding to a PUCCH resource, a frequency hopping mode corresponding to the PUCCH resource, a second hop physical resource block (PRB) corresponding to the PUCCH resource, a PUCCH format corresponding to the PUCCH resource, a start symbol position corresponding to the PUCCH resource, a number of symbols corresponding to the PUCCH resource, an end symbol position corresponding to the PUCCH resource, a PRB offset corresponding to the PUCCH resource, or an initial cyclic shift corresponding to the PUCCH resource.

In the method for resource determination according to the embodiment of the disclosure, the PUCCH resource parameter corresponding to the second resource index further includes an interlace allocation parameter corresponding to the PUCCH resource.

The method for resource determination according to the embodiments of the disclosure may determine one or more resource indexes among the second resource indexes as the first resource indexes based on the PUCCH resource parameters corresponding to the second resource indexes.

In an example, with the method for resource determination according to the embodiments of the disclosure, in response to the PUCCH resource parameter corresponding to the second resource index including a resource index corresponding to the PUCCH resource (i.e., a PUCCH resource index), the first resource index may be determined based on a value of the PUCCH resource index. For example, a resource index with the maximum or minimum value among the second resource indexes are determined as the first resource index. That is, the first resource index is the maximum resource index or the minimum resource index among the second resource indexes.

In an example, with the method for resource determination according to the embodiment of the disclosure, the PUCCH resource parameter corresponding to the second resource index includes a PUCCH format. It may be understood that, in the embodiment of the disclosure, the PUCCH format includes the following:
1. Format 0: occupying 1-2 symbols, and being able to send 1-2 bits;
2. Format 1: occupying 4-14 symbols, and being able to send 1-2 bits;
3. Format 2: occupying 1-2 symbols, and being able to send more than 2 bits;
4. Format 3: occupying 4-14 symbols, and being able to send more than 2 bits;
5. Format 4: occupying 4-14 symbols, and being able to send more than 2 bits.

In the PUCCH format corresponding to the PUCCH resource, parameters of the PUCCH format include one of format 0, format 1, format 2, format 3, and format 4. The parameter of the PUCCH format also include at least one of: a start symbol position, a symbol number, an initial cyclic shift, a time domain orthogonal cover code (time domain OCC), a PRB number, an OCC length, an OCC index and an interlace.

In the embodiment of the disclosure, in response to the PUCCH resource parameter corresponding to the second resource index including the PUCCH format corresponding to the PUCCH resource, the first resource index is determined by one or a combination of A) to C):
A) the first resource index is determined based on an amount of feedback data supported by the PUCCH formats for the PUCCH resources corresponding to the second resource indexes.

In an example, a PUCCH resource with a large amount of feedback data supported by the PUCCH format may be selected. For example, if a number of bits to be sent is large, a PUCCH resource is selected that can support a large amount of feedback data. If the number of bits to be sent is small, a PUCCH resource is selected that can support a small amount of feedback data.

B) the first resource index is determined based on a number of symbols occupied by PUCCH formats of PUCCH resources corresponding to the second resource indexes.

In an example, an appropriate PUCCH format may be selected according to a delay requirement. For example, if the delay is required to be short, a PUCCH format is generally selected that occupies a small number of symbols; otherwise, a PUCCH format is selected that occupies a large number of symbols.

C) the first resource index is determined based on an aggregation level of a DCI signaling carried in a PDCCH candidate, and a number of symbols occupied by PUCCH formats for PUCCH resources corresponding to the second resource indexes and/or an amount of feedback data supported by the PUCCH formats for the PUCCH resources.

In an example, an appropriate PUCCH format is selected according to the aggregation level (AL) of the PDCCH. If the AL is large, meaning that a channel condition is good, a PUCCH format with a small number of symbols (i.e. short symbols) may be selected; otherwise, a PUCCH format with a large number of symbols (i.e. long symbols may be selected.

In an example, in the method for resource determination according to the embodiments of the disclosure, in response to the PUCCH resource parameter of the second resource index including a start symbol position corresponding to the PUCCH resource, the first resource index is determined based on a duration of receiving and processing downlink data scheduled by downlink control information carried in the N PDCCH candidates and/or downlink control information indicated by the N PDCCH candidates, and the start symbol position corresponding to the PUCCH resource.

For example, if the terminal needs a longer time to receive and process a downlink signaling or data or reference signal sent by the base station, a PUCCH resource with a later start symbol position is selected; otherwise, a PUCCH resource with an earlier start symbol position is selected. That is, before the terminal sends feedback information on the PUCCH resource, the process of processing the downlink signaling or data or reference signal must be completed and the process of sending and preparing feedback information to be fed back must be also completed.

In an example, in the method for resource determination according to the embodiments of the disclosure, when the PUCCH resource parameter of the second resource index include a number of symbols corresponding to the PUCCH resource, the first resource index is determined based on a delay requirement of downlink data scheduled by downlink control information carried in the N PDCCH candidates and/or downlink control information indicated by the N PDCCH candidates, as well as the number of symbols corresponding to the PUCCH resource.

For example, if the delay requirement is required to be short, a PUCCH resource with a small duration (i.e., a PUCCH resource with a small number of symbols) is selected; otherwise, a PUCCH resource with a large duration (i.e., a PUCCH resource with a large number of symbols) is selected.

In an example, in the method for resource determination according to the embodiment of the disclosure, in response to the PUCCH resource parameter of the second resource index including the end symbol position corresponding to the PUCCH resource, the first resource index is determined based on a delay requirement of downlink data scheduled by downlink control information carried in the N PDCCH candidates and/or downlink control information indicated by the N PDCCH candidates, and the end symbol position corresponding to the PUCCH resource. The end symbol position corresponding to the PUCCH resource is determined by the start symbol position and the number of symbols.

For example, if the transmission needs to be completed earlier, a PUCCH resource with an earlier end symbol position is selected; otherwise, a PUCCH resource with a later end symbol position is selected.

In an example, in the method for resource determination according to the embodiments of the disclosure, in response to the PUCCH resource parameter of the second resource index including a PRB offset corresponding to the PUCCH resource, a resource index with a maximum PRB offset or a minimum PRB offset among the second resource indexes is determined as the first resource index.

In an example, in the method for resource determination according to the embodiments of the disclosure, in response to the PUCCH resource parameter of the second resource index including an initial cyclic shift corresponding to the PUCCH resource, a resource index with a maximum initial cyclic shift or a minimum initial cyclic shift among the second resource indexes is determined as the first resource index.

In an example, in the method for resource determination according to the embodiments of the disclosure, in response to the PUCCH resource parameter of the second resource index including a frequency hopping mode corresponding to the PUCCH resource, a resource index that supports frequency hopping among the second resource indexes is determined as the first resource index; or a resource index that does not support frequency hopping among the second resource indexes is determined as the first resource index.

In an example, in the method for resource determination according to the embodiment of the disclosure, in response to the PUCCH resource parameter of the second resource index including a second hop PRB corresponding to the PUCCH resource, a resource index with a maximum or minimum second hop PRB index among the second resource indexes is determined as the first resource index.

In an example, in the method for resource determination according to the embodiment of the disclosure, in response to the PUCCH resource parameter of the second resource index including an interlace allocation corresponding to the PUCCH resource, a resource index with a maximum or minimum "rb-SetIndex" in the interlace allocation among the second resource indexes is determined as the first resource index.

In an example, in the method for resource determination according to the embodiments of the disclosure, in response to the PUCCH resource parameter of the second resource index including an interlace allocation corresponding to the PUCCH resource, a resource index with a maximum or minimum subcarrier space (SCS) of the interlace in the interlace allocation among the second resource indexes is determined as the first resource index.

In an example, in the method for resource determination according to the embodiments of the disclosure, in response to the PUCCH resource parameter of the second resource index including a PUCCH format corresponding to the PUCCH resource, a resource index with a maximum or minimum OCC index of the PUCCH format among the second resource indexes is determined as the first resource index.

In an example, in the method for resource determination according to the embodiments of the disclosure, in response to the PUCCH resource parameter of the second resource index including a PUCCH format corresponding to the PUCCH resource, a resource index with a maximum or minimum OCC length of the PUCCH format among the second resource indexes is determined as the first resource index.

In an example, in the method for resource determination according to the embodiments of the disclosure, in response to the PUCCH resource parameter of the second resource index including a PUCCH format corresponding to the PUCCH resource, a resource index with a maximum or minimum number of PRBs in the PUCCH format among the second resource indexes is determined as the first resource index.

In the method for resource determination according to the embodiments of the disclosure, when a PDCCH corresponds to at least two CORESETs, the method for PUCCH resource determination is mainly that, a final target PUCCH resource is determined according to a configuration reference of one of the CORESETs or according to each PUCCH resource parameter determined by each CORESET parameter. Through the disclosure, the terminal is assisted to select the most suitable PUCCH resource while the consistency of the determined PUCCH resource between the base station and the terminal is ensured, thus improving the transmission efficiency of uplink control signaling.

The method for resource determination according to an embodiment of the disclosure may include the following main schemes for determining a target PUCCH resource.

For example, the terminal determines a target PUCCH resource index, and a PDCCH corresponding to the target PUCCH resource index occupies resources of at least two CORESETs.

In an example, the terminal determines the target PUCCH resource index according to a configuration parameter of one of the at least two CORESETs.

In an example, the configuration parameter includes at least one of: a CORESET index of a CORESET, a CORESET pool index corresponding to the CORESET, an index of a starting CCE, and a number of CCEs contained in the CORESET.

In an example, the terminal determines a candidate PUCCH resource index corresponding to each CORESET according to the configuration parameter of each CORESET in at least two CORESETs.

In an example, the configuration parameter of the CORESET that determines the candidate PUCCH resource index includes at least one of: a CORESET index of the CORESET, a CORESET pool index corresponding to the CORESET, an index of a starting CCE, and a number of CCEs included in the CORESET.

In an example, the terminal determines a first candidate PUCCH resource index as the target PUCCH resource index based on the PUCCH resource parameter.

It should be noted that those skilled in the art may understand that the various implementations/embodiments mentioned above in the embodiments of the disclosure may be used in conjunction with the foregoing embodiments, or may be used independently. Whether it is used alone or in combination with the foregoing embodiments, its implementation principles are similar. When the disclosure is implemented, some embodiments are described in a way that these embodiments are used/combined together. Those skilled in the art may understand that such illustration does not limit the embodiments of the disclosure.

Based on the same concept, the embodiments of the disclosure also provide an apparatus for resource determination.

It may be understood that, in order to realize the above-mentioned functions, the apparatus for resource determination according to the embodiments of the disclosure includes corresponding hardware structures and/or software modules for performing various functions. Combining the units and algorithm steps of each example disclosed in the embodiments of the disclosure, the embodiments of the disclosure may be implemented in the form of hardware or a combination of hardware and computer software. Whether a certain function is executed by hardware or computer software driving hardware depends on the specific application and design constraints of the technical solution. Those skilled in the art may use different methods to implement the described functions for each specific application, but such implementation should not be regarded as going beyond the scope of the technical solutions in the embodiments of the disclosure.

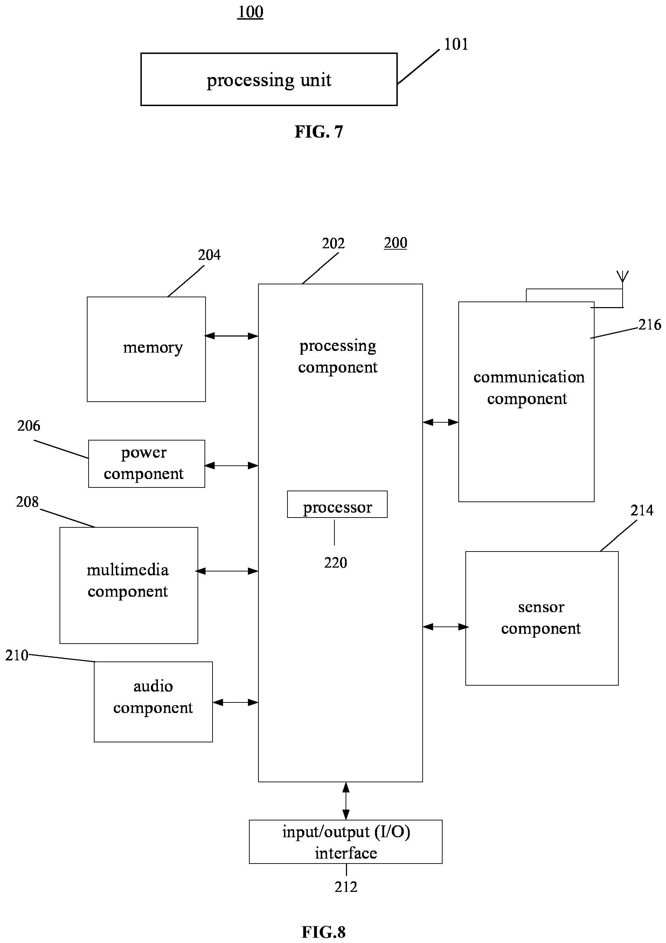

FIG. 7 is a block diagram of an apparatus for resource determination according to an exemplary embodiment. Referring to FIG. 7, the apparatus 100 for resource determination includes a processing unit 101.

The processing unit 101 is configured to determine a first resource index. The first resource index is a target resource index of a PUCCH corresponding to N PDCCH candidates having a linking relationship. N PDCCH candidates correspond to N CORESETs one by one, where N is an integer greater than or equal to 2.

In an implementation, the linking relationship indicates that N PDCCH candidates are configured for PDCCH repetition.

In an implementation, the first resource index is determined based on configuration parameters of N CORESETs. The processing unit 101 determines the first resource index based on the configuration parameters of N CORESETs.

In an implementation, the first resource index is determined based on a configuration parameter of a first CORESET. The first CORESET is one or more CORESETs among the N CORESETs. The processing unit 101 determines the first resource index based on configuration parameter of the first CORESET.

In an implementation, the configuration parameter of the first CORESET includes at least one of: an index of a starting control channel element (CCE) of the first CORESET; a number of CCEs in the first CORESET; a CORESET index of the first CORESET; or a CORESET pool index of the first CORESET.

In an implementation, the first resource index is determined based on second resource indexes. The second resource indexes are N candidate resource indexes determined based on a configuration parameter of each CORESET in the N CORESETs. The processing unit 101 determines the first resource index based on the second resource indexes.

In an implementation, the first resource index is determined based on PUCCH resource parameters corresponding to the second resource indexes. The processing unit 101 determines the first resource index based on the PUCCH resource parameters corresponding to the second resource indexes.

In an implementation, the PUCCH resource parameter corresponding to the second resource index includes at least one of: a resource index corresponding to a PUCCH resource, a frequency hopping mode corresponding to the PUCCH resource, a second hop physical resource block (PRB) corresponding to the PUCCH resource, a PUCCH format corresponding to the PUCCH resource, a start symbol position corresponding to the PUCCH resource, a number of symbols corresponding to the PUCCH resource, an end symbol position corresponding to the PUCCH resource, a PRB offset corresponding to the PUCCH resource, or an initial cyclic shift corresponding to the PUCCH resource.

The PUCCH resource parameter corresponding to the second resource index further includes an interlace allocation parameter corresponding to the PUCCH resource.

In an implementation, when the PUCCH resource parameter corresponding to the second resource index includes a resource index corresponding to the PUCCH resource, including: the first resource index is the maximum resource index or the minimum resource index among the second resource indexes.

In an example, in response to the PUCCH resource parameter corresponding to the second resource index including a resource index corresponding to the PUCCH resource, the processing unit 101 determines a resource index with the maximum or minimum value among the second resource indexes as the first resource index.

In an implementation, when the PUCCH resource parameters corresponding to the second resource index include a PUCCH format corresponding to the PUCCH resource, the processing unit 101 determines the first resource index based on one or a combination of: determining the first resource index based on an amount of feedback data supported by the PUCCH formats for the PUCCH resources corresponding to the second resource indexes; and determining the first resource index based on an aggregation level of DCI carried in a PDCCH candidate, and a number of symbols occupied by the PUCCH formats for the PUCCH resources corresponding to the second resource indexes and/or an amount of feedback data supported by the PUCCH formats for the PUCCH resources.

In an implementation, when the PUCCH resource parameter of the second resource index includes a start symbol position corresponding to the PUCCH resource, the first resource index is determined based on a duration of receiving and processing downlink data scheduled by downlink control information carried in the N PDCCH candidates and/or downlink control information indicated by the N PDCCH candidates, and a start symbol position corresponding to the PUCCH resource.

In an example, in response to the PUCCH resource parameter of the second resource index including a start symbol position corresponding to the PUCCH resource, the processing unit 101 determines the first resource index based on a duration of receiving and processing downlink data scheduled by downlink control information carried in the N PDCCH candidates and/or downlink control information indicated by the N PDCCH candidates, and a start symbol position corresponding to the PUCCH resource.

In an implementation, when the PUCCH resource parameter of the second resource index includes a number of symbols corresponding to the PUCCH resource, the first resource index is determined based on a delay requirement of downlink data scheduled by downlink control information carried in the N PDCCH candidates and/or downlink control information indicated by the N PDCCH candidates, a number of symbols and/or a start symbol position corresponding to the PUCCH resource.

In an example, in response to the PUCCH resource parameter of the second resource index including a number of symbols corresponding to the PUCCH resource, the processing unit 101 determines the first resource index based on a delay requirement of downlink data scheduled by DCI carried in the N PDCCH candidates and/or DCI indicated by the N PDCCH candidates, and a number of symbols and/or a start symbol position corresponding to the PUCCH resource.

In an implementation, when the PUCCH resource parameter of the second resource index includes a PRB offset corresponding to the PUCCH resource, the first resource index is a resource index with a maximum PRB offset or a minimum PRB offset among the second resource indexes.

In an example, in response to the PUCCH resource parameter of the second resource index including a PRB offset corresponding to the PUCCH resource, the processing unit 101 determines a resource index with the maximum or minimum PRB offset among the second resource indexes as the first resource index.

In an implementation, the PUCCH resource parameter of the second resource index includes an initial cyclic shift corresponding to the PUCCH resource, and the first resource index is a resource index with a maximum initial cyclic shift or a minimum initial cyclic shift among the second resource indexes.

In an example, in response to the PUCCH resource parameter of the second resource index includes an initial cyclic shift corresponding to the PUCCH resource, the processing unit 101 determines the resource index with the maximum or minimum initial cyclic shift among the second resource indexes as the first resource index.

In an example, in response to the PUCCH resource parameter of the second resource index including a frequency hopping mode corresponding to the PUCCH resource, the processing unit 101 determines a resource index that supports frequency hopping among the second resource indexes as the first resource index; or the processing unit 101 determines a resource index that does not support frequency hopping among the second resource indexes as the first resource index.

In an example, in response to the PUCCH resource parameter of the second resource index including a second hop PRB corresponding to the PUCCH resource, the processing unit 101 determines a resource index with a maximum or minimum second hop PRB index among the second resource indexes as the first resource index.

In an example, in response to the PUCCH resource parameter of the second resource index including an interlace allocation corresponding to the PUCCH resource, the processing unit 101 determines a resource index with a maximum or minimum "rb-SetIndex" in the interlace allocation among the second resource indexes as the first resource index.

In an example, in response to the PUCCH resource parameter of the second resource index including an interlace allocation corresponding to the PUCCH resource, the processing unit 101 determines a resource index with a maximum or minimum subcarrier space (SCS) of the interlace in the interlace allocation among the second resource indexes as the first resource index.

In an example, in response to the PUCCH resource parameter of the second resource index including a PUCCH format corresponding to the PUCCH resource, the processing unit 101 determines a resource index with a maximum or minimum OCC index of the PUCCH format among the second resource indexes as the first resource index.

In an example, in response to the PUCCH resource parameter of the second resource index including a PUCCH format corresponding to the PUCCH resource, the processing unit 101 determines a resource index with a maximum or minimum OCC length of the PUCCH format among the second resource indexes as the first resource index.

In an example, in response to the PUCCH resource parameter of the second resource index including a PUCCH format corresponding to the PUCCH resource, the processing unit 101 determines a resource index with a maximum or minimum number of PRBs in the PUCCH format among the second resource indexes as the first resource index.

Regarding the apparatus in the foregoing embodiments, the specific manner in which each module executes operations has been described in detail in the embodiments related to the method, which may not be described in detail here.

FIG. 8 is a block diagram of a device 200 for resource determination according to an exemplary embodiment. For example, the device 200 may be a mobile phone, a computer, a digital broadcast terminal, a messaging device, a game console, a tablet device, a medical device, a fitness device, a personal digital assistant, or the like.

Referring to FIG. 8, the device 200 may include one or more of the following components: a processing component 202, a memory 204, a power component 206, a multimedia component 208, an audio component 210, an input/output (I/O) interface 212, a sensor component 214, and a communication component 216.

The processing component 202 generally controls overall operations of the device 200, such as the operations associated with display, phone calls, data communications, camera operations, and recording operations. The processing component 202 may include one or more processors 220 to execute instructions to perform all or some of the steps of the methods described above. Moreover, the processing component 202 may include one or more modules that facilitate interactions between the processing component 202 and other components. For example, the processing component 202 may include a multimedia module to facilitate interactions between the multimedia component 208 and the processing component 202.

The memory 204 is configured to store various types of data to support operation of the device 200. Examples of such data include instructions for any application or method operating on the device 200, contact data, phonebook data, messages, pictures, videos, and the like. The memory 204 may be implemented by any type of volatile or nonvolatile storage device or their combination, such as a static random-access memory (SRAM), an electrically-erasable programmable read only memory (EEPROM), an erasable programmable read only memory (EPROM), a programmable read only memory (PROM), a read only memory (ROM), a magnetic memory, a flash memory, a magnetic or optical disk.

The power component 206 provides power to various components of the device 200. The power component 206 may include a power management system, one or more power sources, and any other components associated with the generation, management, and distribution of power in the device 200.

The multimedia component 208 includes a screen providing an output interface between the device 200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 208 includes a front-facing camera and/or a rear-facing camera. When the device 200 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 210 is configured to output and/or input audio signals. For example, the audio component 210 includes a microphone (MIC for short) that is configured to receive external audio signals when the device 200 is in an operating mode, such as a call mode, a recording mode, and a voice recognition mode. The received audio signal may be further stored in the memory 204 or transmitted via the communication component 216. In some embodiments, the audio component 210 also includes a speaker for outputting audio signals.

The I/O interface 212 provides an interface between the processing component 202 and peripheral interface modules, such as a keyboard, a click wheel, buttons, and the like. The buttons may include, but are not limited to, a home button, a volume button, a starting button, and a locking button.

The sensor component 214 includes one or more sensors to provide status assessments of various aspects of the device 200. For instance, the sensor component 214 may detect an open/closed status of the device 200, relative positioning of components, e.g., the display and the keypad, of the device 200, a change in position of the device 200 or a component of the device 200, a presence or absence of user contact with the device 200, an orientation or an acceleration/deceleration of the device 200, and a change in temperature of the device 200. The sensor component 214 may include a proximity sensor configured to detect the presence of nearby objects without any physical contact. The sensor component 214 may also include a light sensor, such as a complementary metal oxide semiconductor (CMOS) or a charge-coupled device (CCD) image sensor, for use in imaging applications. In some embodiments, the sensor component 214 may also include an accelerometer sensor, a gyroscope sensor, a magnetic sensor, a pressure sensor, or a temperature sensor.

The communication component 216 is configured to facilitate communication, wired or wirelessly, between the device 200 and other devices. The device 200 can access a wireless network based on a communication standard, such as WiFi, 2G, or 3G, or their combination. In an exemplary embodiment, the communication component 216 receives a broadcast signal or broadcast associated information from an external broadcast management system via a broadcast channel. In an exemplary embodiment, the communication component 216 further includes a near field communication (NFC) module to facilitate short-range communications. For example, the NFC module may be implemented based on a radio frequency identification (RFID) technology, an infrared data association (IrDA) technology, an ultra-wide band (UWB) technology, a Bluetooth (BT) technology, and other technologies.

In exemplary embodiments, the device 200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method.

In exemplary embodiments, there is also provided a non-transitory computer readable storage medium including instructions, such as included in the memory 204, executable by the processor 220 in the device 200, for performing the above method. For example, the non-transitory computer readable storage medium may be a ROM, a random access memory (RAM), a CD-ROM, a magnetic tape, a floppy disc, an optical data storage device, and the like.

It may be further understood that, the term "a plurality of' in the disclosure refers to two or more, and other quantifiers are similar to the term. The term "and/or" describes an association relationship of associated objects, indicating that there may be three types of relationships, for example, A and/or B may indicate: A exists alone, A and B exist simultaneously, and B exists independently. The character "/" generally indicates that the contextual objects are in an "or" relationship. The singular forms "a", "said" and "the" are also intended to include the plural unless the context clearly dictates otherwise.

It may be further understood that the terms "first", "second", etc. are used to describe various information, but the information should not be limited to these terms. These terms are only used to distinguish information of the same type from one another, and do not imply a specific order or degree of importance. In fact, expressions such as "first" and "second" may be used interchangeably. For example, without departing from the scope of the disclosure, first information may also be called second information, and similarly, second information may also be called first information.

It may be further understood that although operations are described in a specific order in the drawings in the embodiments of the disclosure, it should not be understood as requiring these operations to be performed in the specific order shown or in a serial order, or requiring all operations shown to be performed to obtain the desired result. In certain circumstances, multitasking and parallel processing may be advantageous.

Those skilled in the art will be aware of other implementations of the disclosure after considering the specification and practicing the disclosure disclosed herein. The disclosure is intended to cover any variations, uses, or adaptive changes of the disclosure, which follow the general principles of the disclosure and include common knowledge or conventional technical means in the technical field not disclosed herein. The description and the embodiments are to be regarded as exemplary, and the true scope and spirit of the disclosure are indicated in the following claims.

It should be understood that the disclosure is not limited to the precise structures described above and illustrated in the accompanying drawings, and that various modifications and changes may be made without departing from its scope. The scope of the disclosure is limited only by the appended claims.

## Claims

1. A method for resource determination, comprising:
determining a first resource index, wherein the first resource index is a target resource index of a physical uplink control channel (PUCCH) corresponding to N physical downlink control channel (PDCCH) candidates that have a linking relationship, and the N PDCCH candidates have one-to-one correspondence with N control resource sets (CORESETs), where N is an integer greater than or equal to 2.

2. The method of claim 1, wherein the linking relationship indicates that the N PDCCH candidates are configured for PDCCH repetition.

3. The method of claim 1, wherein the first resource index is determined based on configuration parameters of the N CORESETs.

4. The method of claim 3, wherein the first resource index is determined based on a configuration parameter of a first CORESET; and
the first CORESET is one or more CORESETs among the N CORESETs.

5. The method of claim 4, wherein the configuration parameter of the first CORESET comprises at least one of:
an index of a starting control channel element (CCE) of the first CORESET;
a number of CCEs in the first CORESET;
a CORESET index of the first CORESET; or
a CORESET pool index of the first CORESET.

6. The method of claim 3, wherein the first resource index is determined based on second resource indexes, wherein the second resource indexes are N candidate resource indexes determined based on a configuration parameter of each CORESET in the N CORESETs.

7. The method of claim 6, wherein the first resource index is determined based on PUCCH resource parameters corresponding to the second resource indexes.

8. The method of claim 7, wherein the PUCCH resource parameter corresponding to the second resource index comprises at least one of:
a resource index corresponding to a PUCCH resource, a frequency hopping mode corresponding to the PUCCH resource, a second hop physical resource block (PRB) corresponding to the PUCCH resource, a PUCCH format corresponding to the PUCCH resource, a start symbol position corresponding to the PUCCH resource, a number of symbols corresponding to the PUCCH resource, an end symbol position corresponding to the PUCCH resource, a PRB offset corresponding to the PUCCH resource, or an initial cyclic shift corresponding to the PUCCH resource.

9. The method of claim 8, wherein when the PUCCH resource parameter corresponding to the second resource index comprises the resource index corresponding to the PUCCH resource, the first resource index is a maximum resource index or a minimum resource index among the second resource indexes.

10. The method of claim 8, wherein when the PUCCH resource parameter corresponding to the second resource index comprises the PUCCH format corresponding to the PUCCH resource, the first resource index is determined by one or a combination of:
determining the first resource index based on an amount of feedback data supported by the PUCCH formats for the PUCCH resources corresponding to the second resource indexes; and
determining the first resource index based on an aggregation level of downlink control information carried in a PDCCH candidate, and a number of symbols occupied by the PUCCH formats for the PUCCH resources corresponding to the second resource indexes and/or an amount of feedback data supported by the PUCCH formats for the PUCCH resources.

11. The method of claim 8, wherein when the PUCCH resource parameter corresponding to the second resource index comprises the start symbol position corresponding to the PUCCH resource, the first resource index is determined based on a duration of receiving and processing downlink data scheduled by downlink control information carried in the N PDCCH candidates and/or downlink control information indicated by the N PDCCH candidates, and the start symbol position corresponding to the PUCCH resource.

12. The method of claim 8, wherein when the PUCCH resource parameter corresponding to the second resource index comprises the number of symbols corresponding to the PUCCH resource, the first resource index is determined based on a delay requirement of downlink data scheduled by downlink control information carried in the N PDCCH candidates and/or downlink control information indicated by the N PDCCH candidates, as well as the number of symbols and/or the start symbol position corresponding to the PUCCH resource.

13. The method of claim 8, wherein when the PUCCH resource parameter corresponding to the second resource index comprises the PRB offset corresponding to the PUCCH resource, the first resource index is a resource index with a maximum PRB offset or a minimum PRB offset among the second resource indexes.

14. The method of claim 8, wherein when the PUCCH resource parameter corresponding to the second resource index comprises the initial cyclic shift corresponding to the PUCCH resource, the first resource index is a resource index with a maximum initial cyclic shift or a minimum initial cyclic shift among the second resource indexes.

15. An apparatus for resource determination, comprising:
a processing unit, configured to determine a first resource index, wherein the first resource index is a target resource index of a physical uplink control channel (PUCCH) corresponding to N physical downlink control channel (PDCCH) candidates that have a linking relationship, and the N PDCCH candidates have one-to-one correspondence with N control resource sets (CORESETs), where N is an integer greater than or equal to 2.

16. The apparatus of claim 15, wherein the linking relationship indicates that the N PDCCH candidates are configured for PDCCH repetition.

17. The apparatus of claim 15, wherein the first resource index is determined based on configuration parameters of the N CORESETs.

18. The apparatus of claim 17, wherein the first resource index is determined based on a configuration parameter of a first CORESET; and
the first CORESET is one or more CORESETs among the N CORESETs.

19. The apparatus of claim 18, wherein the configuration parameter of the first CORESET comprises at least one of:
an index of a starting control channel element (CCE) of the first CORESET;
a number of CCEs in the first CORESET;
a CORESET index of the first CORESET; or
a CORESET pool index of the first CORESET.

20. The apparatus of claim 17, wherein the first resource index is determined based on second resource indexes, wherein the second resource indexes are N candidate resource indexes determined based on a configuration parameter of each CORESET in the N CORESETs.

21. The apparatus of claim 20, wherein the first resource index is determined based on PUCCH resource parameters corresponding to the second resource indexes.

22. The apparatus of claim 21, wherein the PUCCH resource parameter corresponding to the second resource index comprises at least one of: a resource index corresponding to a PUCCH resource, a frequency hopping mode corresponding to the PUCCH resource, a second hop physical resource block (PRB) corresponding to the PUCCH resource, a PUCCH format corresponding to the PUCCH resource, a start symbol position corresponding to the PUCCH resource, a number of symbols corresponding to the PUCCH resource, an end symbol position corresponding to the PUCCH resource, a PRB offset corresponding to the PUCCH resource, or an initial cyclic shift corresponding to the PUCCH resource.

23. The apparatus of claim 22, wherein the PUCCH resource parameter corresponding to the second resource index comprises the resource index corresponding to the PUCCH resource, wherein the first resource index is a maximum resource index or a minimum resource index among the second resource indexes.

24. The apparatus of claim 22, wherein the PUCCH resource parameter corresponding to the second resource index comprises the PUCCH format corresponding to the PUCCH resource, wherein the first resource index is determined by one or a combination of:
determining the first resource index based on an amount of feedback data supported by the PUCCH formats for the PUCCH resources corresponding to the second resource indexes; and
determining the first resource index based on an aggregation level of downlink control information carried in a PDCCH candidate and a number of symbols occupied by the PUCCH formats for the PUCCH resources corresponding to the second resource indexes and/or an amount of feedback data supported by the PUCCH formats for the PUCCH resources.

25. The apparatus of claim 22, wherein the PUCCH resource parameter corresponding to the second resource index comprises the start symbol position corresponding to the PUCCH resource, wherein the first resource index is determined based on a duration of receiving and processing downlink data scheduled by downlink control information carried in the N PDCCH candidates and/or downlink control information indicated by the N PDCCH candidates, and the start symbol position corresponding to the PUCCH resource.

26. The apparatus of claim 22, wherein the PUCCH resource parameter corresponding to the second resource index comprises the number of symbols corresponding to the PUCCH resource, wherein the first resource index is determined based on a delay requirement of downlink data scheduled by downlink control information carried in the N PDCCH candidates and/or downlink control information indicated by the N PDCCH candidates, as well as the number of symbols and/or the start symbol position corresponding to the PUCCH resource.

27. The apparatus of claim 22, wherein the PUCCH resource parameter corresponding to the second resource index comprises the PRB offset corresponding to the PUCCH resource, and the first resource index is a resource index with a maximum PRB offset or a minimum PRB offset among the second resource indexes.

28. The apparatus of claim 22, wherein the PUCCH resource parameter corresponding to the second resource index comprises the initial cyclic shift corresponding to the PUCCH resource, and the first resource index is a resource index with a maximum initial cyclic shift or a minimum initial cyclic shift among the second resource indexes.

29. A device for resource determination, comprising:
a processor, and
a memory, stored with instructions executable by the processor,
wherein the processor is configured to implement the method for resource determination according to any one of claims 1 to 14.

30. A non-transitory computer-readable storage medium having instructions stored thereon, wherein when the instructions are executed by a processor of a mobile terminal, the mobile terminal is caused to execute the method for resource determination according to any one of claims 1 to 14.
